# DEMANDE DE BREVET EUROPEEN

(11) **EP 3 023 875 A1**
(43) Date de publication de la demande: **25.05.2016**
(21) Numéro de dépôt: 15194721.5
(22) Date de dépôt: 16.11.2015
(51) Int. Cl.: G06F 11/22, G06F 11/34

(54) **PROCEDE ET ORDONNANCEUR DE DETECTION DE DYSFONCTIONNEMENT D'OCCURRENCE DANS DES GRANDES INFRASTRUCTURES INFORMATIQUES**

(30) Priorité: 18.11.2014 FR 1461095
(71) Demandeur: BULL SAS, 78340 Les Clayes sous Bois (FR)
(72) Inventeur: GERPHAGNON, Jean Olivier, 38450 Vif (FR); JEAUGEY, Sylvain, 38240 Meylan (FR); COUVEE, Philippe, 38190 Villard Bonnot (FR)
(74) Mandataire: Cabinet Camus Lebkiri

(57) **Abrégé**

L'invention concerne notamment un procédé (100) de surveillance de fonctionnement d'une infrastructure informatique comportant une pluralité de noeuds de calcul. Le procédé (100) de surveillance comportant les étapes de:
- Sélectionner (101) des noeuds de calcul pour réaliser un calcul,
- Réaliser (102) ledit calcul via lesdits noeuds de calcul sélectionnés,
- Attribuer (103), via ledit ordonnanceur, un score à chacun des noeuds de calcul ayant pris part audit calcul réalisé, chaque score reflétant un écart entre un paramètre de fonctionnement mesuré du noeud de calcul pour lequel ledit score est attribué et un paramètre de fonctionnement de référence dudit noeud de calcul pour lequel ledit score est attribué,
- Vérifier (105) le fonctionnement desdits noeuds de calcul ayant pris part audit calcul réalisé, ladite vérification (105) étant réalisée à partir des scores attribués aux noeuds de calcul ayant pris part audit calcul.

## Description

### DOMAINE TECHNIQUE

La présente invention se rapporte à un procédé et à un ordonnanceur de surveillance de fonctionnement d'une infrastructure informatique comportant une pluralité de noeuds de calcul. Une telle infrastructure est également dénommée calculateur haute performance et est mise en oeuvre pour la réalisation de calculs de haute performance, également dénommé HPC (acronyme de High Performance Computing en terminologie anglo-saxonne).

### ETAT DE LA TECHNIQUE ANTERIEUR

Le calcul de type haute performance s'est développé pour la recherche universitaire comme pour l'industrie, notamment dans des domaines techniques tels que l'automobile, l'aéronautique, l'énergie, la climatologie et les sciences de la vie. La modélisation et la simulation permettent en particulier de réduire les coûts de développement, d'accélérer la mise sur le marché de produits innovants, plus fiables et moins consommateurs d'énergie. Pour les chercheurs, le calcul haute performance est devenu un moyen d'investigation indispensable.

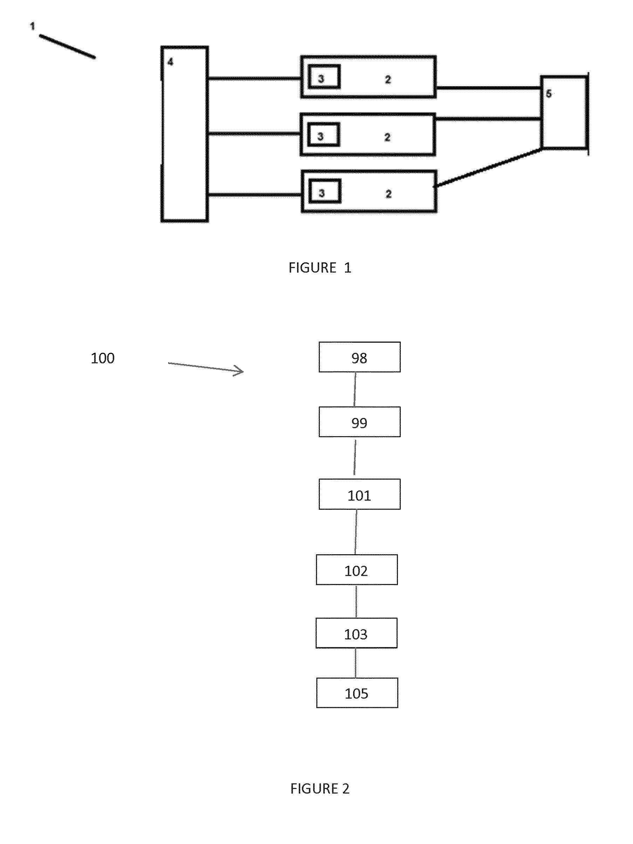

Les calculateurs de type haute performance sont formés par la réunion de noeuds de calcul rassemblant chacun plusieurs processeurs. Ces calculateurs consistent ainsi à multiplier les noeuds de calcul, de manière à pouvoir exécuter simultanément un grand nombre de calculs. Comme illustré à la figure 1, ces calculateurs 1 connus dans l'art antérieur comprennent typiquement plusieurs noeuds de calcul 2 comprenant chacun un contrôleur de réseau 3 et sont reliés entre eux par un réseau 4 d'interconnexion. Par ailleurs, un réseau de gestion 5 interagit avec les noeuds de calcul 2 afin de les configurer, de les surveiller et de les administrer.

Dans les calculateurs de type haute performance, composés pour les plus grands de quelques dizaines de milliers de noeuds de calcul, l'un des problèmes les plus difficiles à résoudre est d'identifier les noeuds de calcul présentant des dysfonctionnements intermittents, n'affectant les calculs que de façon indirecte (calculs ralentis, calculs faux...). En outre, le nombre de pannes augmente exponentiellement avec le nombre de noeuds de calcul que comporte le calculateur.

Une panne d'un noeud de calcul peut notamment être provoquée par la défaillance d'un composant matériel tel qu'une unité centrale de traitement (CPU), une mémoire ou une alimentation électrique, ou par un défaut (typiquement appelé bug) d'un composant logiciel mis en oeuvre par le noeud de calcul considéré ou par des éléments d'infrastructure.

Une solution existante lorsque l'on soupçonne le calculateur d'être ralenti est de lancer une analyse consistant à réaliser une succession dichotomique de calculs au sein du calculateur haute performance afin d'isoler le noeud défaillant. Lorsqu'une succession dichotomique de calculs est lancée, le calculateur ne peut pas être utilisé à d'autres fins que celle de diagnostic. En conséquence, cette analyse nécessite l'exclusivité d'utilisation du calculateur haute performance et est donc très coûteuse.

### EXPOSE DE L'INVENTION

L'invention a donc pour objectif de remédier aux inconvénients de l'état de la technique. Dans ce contexte, la présente invention a notamment pour but de fournir un procédé de surveillance de fonctionnement d'une infrastructure informatique comportant une pluralité de noeuds de calcul, la mise en oeuvre du procédé de surveillance ne nécessitant pas de monopoliser l'infrastructure informatique pour réaliser un diagnostic de fonctionnement.

A cette fin, l'invention porte sur un procédé de surveillance de fonctionnement d'une infrastructure informatique comportant une pluralité de noeuds de calcul, ledit procédé de surveillance comportant les étapes de:
- sélectionner, via un ordonnanceur, des noeuds de calcul pour réaliser au moins un calcul,
- Réaliser ledit calcul via lesdits noeuds de calcul sélectionnés,
- Attribuer, via ledit ordonnanceur, un score à chacun des noeuds de calcul ayant pris part audit calcul réalisé, chaque score reflétant un écart entre un paramètre de fonctionnement mesuré du noeud de calcul pour lequel ledit score est attribué et un paramètre de fonctionnement de référence dudit noeud de calcul pour lequel ledit score est attribué,
- Vérifier, via ledit ordonnanceur, le fonctionnement desdits noeuds de calcul ayant pris part audit calcul réalisé, ladite vérification étant réalisée à partir des scores attribués aux noeuds de calculs ayant pris part audit calcul.

Dans une mise en oeuvre non limitative, le procédé de surveillance comporte les étapes initiales de lancer un calcul de référence sur au moins un noeud de calcul, puis de déterminer un paramètre de fonctionnement de référence dudit noeud de calcul.

Les scores sont attribués lors d'une utilisation standard de l'infrastructure informatique. Plus particulièrement, l'étape d'attribution de scores et l'étape de vérification de fonctionnement sont mises en oeuvre au cours de la réalisation de calculs. Il n'est donc pas nécessaire de monopoliser l'ensemble des noeuds de calcul de l'infrastructure informatique (ou calculateur de type haute performance également dénommé supercalculateur), ni même une partie des noeuds de calcul sur une longue période afin de réaliser un diagnostic de fonctionnement des noeuds de calcul. La surveillance du fonctionnement de l'ensemble des noeuds est donc peu couteuse puisque cette surveillance est réalisée alors même que le calculateur réalise des calculs.

Le procédé de surveillance de fonctionnement d'une infrastructure informatique selon l'invention peut également présenter une ou plusieurs des caractéristiques ci-après, considérées individuellement ou selon toutes les combinaisons techniquement réalisables.

Dans une mise en oeuvre non limitative, le procédé comporte en outre les étapes initiales de lancer un calcul de référence sur au moins un noeud de calcul, puis de déterminer un paramètre de fonctionnement de référence dudit au moins un noeud de calcul.

Dans une mise en oeuvre non limitative, le paramètre de fonctionnement est formé par le nombre d'erreurs corrigées par un noeud de calcul pour réaliser un calcul.

Dans une mise en oeuvre non limitative, le paramètre de fonctionnement de référence est formé par le nombre d'erreurs corrigées par un noeud de calcul pour réaliser un calcul.

Dans une mise en oeuvre non limitative, le paramètre de fonctionnement est formé par le temps pris par un noeud de calcul pour réaliser un calcul.

Dans une mise en oeuvre non limitative, le paramètre de fonctionnement de référence est formé par le temps pris par un noeud de calcul pour réaliser un calcul.

Dans une mise en oeuvre non limitative, les étapes de sélection, de réalisation et d'attribution sont réitérées de sorte que l'étape de vérification soit réalisée pour chacun des noeuds de calcul à partir d'une pluralité de scores attribués à chacun des noeuds de calcul ayant réalisé une pluralité de calculs.

Dans une mise en oeuvre non limitative, la vérification de fonctionnement est réalisée en calculant, pour un noeud de calcul, une moyenne d'une pluralité de scores attribués pour la réalisation d'une pluralité de calculs.

Un aspect de l'invention porte sur un ordonnanceur de surveillance de fonctionnement d'une infrastructure informatique, ledit ordonnanceur étant construit et agencé pour mettre en oeuvre le procédé de surveillance de fonctionnement d'une infrastructure informatique selon l'invention.

### BREVE DESCRIPTION DES FIGURES

D'autres caractéristiques et avantages de l'invention ressortiront clairement de la description qui en est donnée ci-dessous, à titre indicatif et nullement limitatif, en référence aux figures annexées, parmi lesquelles :
- la figure 1 illustre, de façon schématique, un exemple de calculateur de type haute performance conforme à ceux de l'état de la technique,
- la figure 2 illustre un synoptique d'une première mise en oeuvre du procédé de surveillance de fonctionnement d'une infrastructure informatique comportant une pluralité de noeuds de calcul conforme à l'invention,
- la figure 3 illustre un synoptique d'une deuxième mise en oeuvre du procédé de surveillance de fonctionnement d'une infrastructure informatique comportant une pluralité de noeuds de calcul conforme à l'invention,
- la figure 4 illustre un exemple de mise en oeuvre du procédé de surveillance de fonctionnement selon l'invention,
- la figure 5 illustre de manière schématique une infrastructure informatique de type calculateur haute performance comportant un ordonnanceur conforme à l'invention.

Pour des raisons de clarté, seuls les éléments utiles pour la compréhension de l'invention ont été représentés et ceci, sans respect de l'échelle et de manière schématique. En outre, les éléments similaires situés sur différentes figures comportent des références identiques.

### DESCRIPTION DETAILLEE D'AU MOINS UN MODE DE REALISATION DE L'INVENTION

La figure 2 illustre un synoptique des étapes du procédé 100 de surveillance de fonctionnement d'une infrastructure informatique comportant une pluralité de noeuds de calcul conforme à l'invention.

Dans une mise en oeuvre non limitative, le procédé 100 comporte une étape de lancer 98 un calcul de référence sur au moins un noeud de calcul. Cette étape de lancer 98 un calcul de référence peut être effectuée sur un, plusieurs, ou l'ensemble des noeuds de calcul de l'infrastructure informatique. Ces calculs peuvent être identiques ou différents.

Le procédé 100 comporte également une étape de déterminer 99 un paramètre de fonctionnement de référence du noeud de calcul. Lorsque l'étape de lancer 98 un calcul de référence est réalisée sur l'ensemble des noeuds de calcul de l'infrastructure informatique, alors un paramètre de fonctionnement de référence est déterminé pour chacun des noeuds de calcul de l'infrastructure informatique.

Le procédé comporte également une étape de sélection 101, via un ordonnanceur, des noeuds de calcul pour réaliser au moins un calcul. Un tel ordonnanceur est également connu sous la terminologie anglosaxonne « Batch Manager ». L'ordonnanceur possède la visibilité de toute l'activité de l'infrastructure informatique (indifféremment dénommé calculateur) et est donc construit et agencé pour sélectionner des noeuds de calcul disponibles pour réaliser un calcul demandé par un utilisateur. Par exemple, on entend par calcul une demande d'exécution d'une application.

De manière plus générale, l'ordonnanceur permet de déterminer quelle application sera exécutée et sur quels noeuds de calcul de manière à optimiser le placement des travaux. En d'autres termes, un des rôles de l'ordonnanceur est de permettre l'exécution de toutes les applications à un moment ou un autre et d'utiliser au mieux les noeuds de calcul pour l'utilisateur.

Le procédé 100 comporte également une étape de réalisation du calcul 102 via les noeuds de calculs sélectionnés. Un calcul peut être exécuté sur un ou plusieurs noeuds de calcul.

Le procédé 100 comporte une étape d'attribution 103, via l'ordonnanceur, d'un score à chacun des noeuds de calcul ayant pris part au calcul réalisé. Chaque score reflète un écart entre un paramètre de fonctionnement du noeud de calcul pour lequel le score est attribué et un paramètre de fonctionnement de référence du noeud de calcul pour lequel le score est attribué,

A titre d'exemple non limitatif, le paramètre de fonctionnement (de référence ou non) est le temps pris par un noeud de calcul 11 pour réaliser un calcul (indifféremment dénommé temps d'exécution), le nombre d'erreurs corrigées, le temps CPU (de l'anglais Central Processing Unit) utilisateur vs système, l'utilisation de la mémoire (par exemple, lorsqu'il y a un problème de transmission, les paquets non transmis sont stockés dans la mémoire et donc la quantité de mémoire consommée est supérieure à une quantité de mémoire consommée de référence), le nombre d'interruptions matérielles (IRQ de l'anglais Interrupt ReQuest). Il est entendu que d'autres types de paramètres de fonctionnement et de paramètres de fonctionnement de référence peuvent être utilisés.

En d'autres termes, à l'issue de chaque calcul, l'ordonnanceur attribue un ensemble de scores (par exemple, en fonction du temps que le calcul a pris par rapport à une référence, au nombre d'erreurs corrigées qui ont été observées, ...). Par exemple, si le paramètre de fonctionnement surveillé est le temps mis par un noeud de calcul pour réaliser un calcul et que ce temps de calcul est supérieur à un temps de référence, alors l'ordonnanceur va lui attribuer un score traduisant une défaillance de ce noeud. Ces scores sont donnés à chacun des noeuds de calcul ayant pris part au calcul.

Le procédé comporte également une étape de vérification 105, via l'ordonnanceur, du fonctionnement des noeuds de calcul ayant pris part au calcul réalisé. La vérification 105 est réalisée à partir des scores attribués à l'ensemble des noeuds de calculs ayant pris part au calcul.

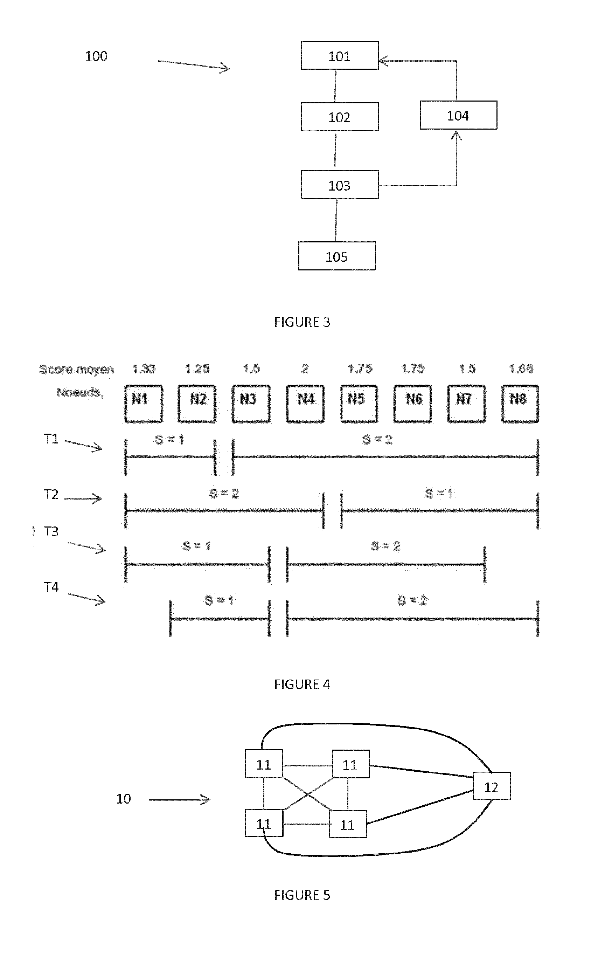

Dans une mise en oeuvre de l'invention illustrée sur la figure 3, les étapes de sélection 101, de réalisation 102 et d'attribution 103 sont réitérées 104. Ainsi, chacun des noeuds de calcul 11 sélectionné réalise une pluralité de calculs et une pluralité de scores est attribuée à chacun des noeuds de calcul. Par exemple, lorsqu'une pluralité de scores reflétant une pluralité de paramètres de fonctionnement d'une pluralité de noeuds de calcul sont enregistrés, la vérification de fonctionnement 105 peut être réalisée en calculant, pour chaque noeud de calcul, une moyenne des scores qui ont été attribués pour un même noeud de calcul ayant réalisé une pluralité de calculs afin d'en déduire le fonctionnement du noeud de calcul. En d'autres termes, des statistiques agrégées permettent de faire ressortir les noeuds de calcul les plus lents.

La figure 4 illustre à titre d'exemple, les étapes attribution 103 et de vérification 105 de fonctionnement suite à la réalisation de huit calculs via huit noeuds de calcul d'une infrastructure informatique.

Plus particulièrement, dans cet exemple illustré sur la figure 4, lorsqu'un noeud de calcul fonctionne correctement un score de 1 lui est attribué et lorsqu'un noeud de calcul fonctionne incorrectement un score de 2 lui est attribué. Autrement dit, si aucun écart n'est détecté entre le paramètre de fonctionnement mesuré et le paramètre de fonctionnement de référence alors un score de 1 est attribué. Au contraire, lorsqu'un écart est détecté entre le paramètre de fonctionnement mesuré et le paramètre de fonctionnement de référence alors un score de 2 est attribué.

Au temps T1, un premier calcul est réalisé par les noeuds de calcul N1 et N2 et un deuxième calcul est réalisé par les noeuds de calcul N3 à N8. Un score S = 1 est attribué aux noeuds de calcul 1 et 2 tandis qu'un score S = 2 est attribué aux noeuds de calcul N3 à N8.

Au temps T2, un troisième calcul est réalisé par les noeuds de calcul N1 à N4 et un quatrième calcul est réalisé par les noeuds de calcul N5 à N8. Un score S = 2 est attribué aux noeuds de calcul N1 à N4 tandis qu'un score S = 1 est attribué aux noeuds de calcul N5 à N8.

Au temps T3, un cinquième calcul est réalisé par les noeuds de calcul N1 à N3 et un sixième calcul est réalisé par les noeuds de calcul N4 à N7. Un score S = 1 est attribué aux noeuds de calcul N1 à N3 tandis qu'un score S = 2 est attribué aux noeuds de calcul N4 à N7.

Au temps T4, un septième calcul est réalisé par les noeuds de calcul N2 et N3 et un huitième calcul est réalisé par les noeuds de calcul N4 à N8. Un score S = 1 est attribué aux noeuds de calcul N2 et N3 tandis qu'un score S = 2 est attribué aux noeuds de calcul N4 à N8.

Dans ce cas, la vérification 105 de fonctionnement est réalisée en calculant pour chaque noeud de calcul une moyenne des scores S attribués. Ainsi, il apparaît que le noeud de calcul N4 présente une défaillance puisque les scores qui lui ont été attribués pour la réalisation des huit calculs sont constamment de 2.

La figure 5 illustre de manière schématique une infrastructure informatique 10 de type calculateur haute performance comportant un ordonnanceur 12 conforme à l'invention. L'infrastructure informatique 10 comporte une pluralité de noeuds de calcul 11. L'ordonnanceur 12 de surveillance est construit et agencé pour :
- lancer un calcul de référence sur au moins un noeud de calcul,
- déterminer un paramètre de fonctionnement de référence dudit noeud de calcul,
- sélectionner des noeuds de calcul 11 pour réaliser un calcul,
- Réaliser le calcul via les noeuds de calcul 11 sélectionnés,
- Attribuer un score S à chacun des noeuds de calcul 11 ayant pris part au calcul réalisé, chaque score S reflétant un écart entre un paramètre de fonctionnement mesuré dudit noeud de calcul 11 pour lequel ledit score est attribué et un paramètre de fonctionnement de référence dudit noeud de calcul pour lequel ledit score est attribué,
- Vérifier le fonctionnement des noeuds de calcul 11 ayant pris part au calcul réalisé, la vérification étant réalisée à partir des scores S attribués à l'ensemble des noeuds de calcul 11 ayant pris part au calcul.

## Revendications

1. Procédé (100) de surveillance de fonctionnement d'une infrastructure informatique (10) comportant une pluralité de noeuds de calcul (11), ledit procédé (100) de surveillance comportant les étapes de:
- Sélectionner (101), via un ordonnanceur (12), des noeuds de calcul (11) pour réaliser au moins un calcul,
- Réaliser (102) ledit calcul via lesdits noeuds de calcul (11) sélectionnés,
- Attribuer (103), via ledit ordonnanceur (12), un score (S) à chacun des noeuds de calcul (11) ayant pris part audit calcul réalisé, chaque score (S) reflétant un écart entre un paramètre de fonctionnement mesuré du noeud de calcul (11) pour lequel ledit score (S) est attribué et un paramètre de fonctionnement de référence dudit noeud de calcul (11) pour lequel ledit score (S) est attribué,
- Vérifier (105), via ledit ordonnanceur (12), le fonctionnement desdits noeuds de calcul (11) ayant pris part audit calcul réalisé, ladite vérification (105) étant réalisée à partir des scores (S) attribués aux noeuds de calcul (11) ayant pris part audit calcul.

2. Procédé (100) selon la revendication précédente comportant en outre les étapes initiales de lancer (98) un calcul de référence sur au moins un noeud de calcul (11), puis de déterminer (99) un paramètre de fonctionnement de référence dudit au moins un noeud de calcul (11).

3. Procédé (100) selon l'une des revendications 1 ou 2 selon lequel le paramètre de fonctionnement mesuré et le paramètre de fonctionnement de référence sont formés par le nombre d'erreurs corrigées par un noeud de calcul (11) pour réaliser un calcul.

4. Procédé (100) selon l'une des revendications 1 ou 2 selon lequel le paramètre de fonctionnement mesuré et le paramètre de fonctionnement de référence sont formés par le temps pris par un noeud de calcul (11) pour réaliser un calcul.

5. Procédé (100) selon l'une quelconque des revendications précédentes selon lequel les étapes de sélection (101), de réalisation (102) et d'attribution (103) sont réitérées (104) de sorte que l'étape de vérification (105) soit réalisée pour chacun des noeuds de calcul (11) à partir d'une pluralité de scores (S) attribués à chacun des noeuds de calcul (11) ayant réalisé une pluralité de calculs.

6. Procédé (100) selon la revendication 5 selon lequel la vérification (105) de fonctionnement est réalisée en calculant, pour un noeud de calcul (11), une moyenne d'une pluralité de scores (S) attribués pour la réalisation d'une pluralité de calculs.

7. Ordonnanceur (12) de surveillance de fonctionnement d'une infrastructure informatique (10), ledit ordonnanceur (12) étant construit et agencé pour mettre en oeuvre le procédé (100) de surveillance de fonctionnement d'une infrastructure informatique (10) selon l'une au moins des revendications précédentes.
